# EUROPÄISCHE PATENTSCHRIFT

(11) **EP 3 901 670 B1**
(45) Veröffentlichungstag und Bekanntmachung des Hinweises auf die Patenterteilung: **03.08.2022**
(21) Anmeldenummer: 20170903.7
(22) Anmeldetag: 22.04.2020
(51) Int. Cl.: G01V 8/24, G01V 8/20, G01B 11/14, G01S 17/10, G01S 7/481, G01B 11/245, G01B 11/02

(54) **TASTENDER MEHRSTRAHLENSENSOR, INSBESONDERE LICHTGITTER UND VERFAHREN ZUR ERFASSUNG VON OBJEKTEN**
SCANNING MULTI-BEAM SENSOR, IN PARTICULAR LIGHT GRID AND METHOD FOR DETECTING OBJECTS
CAPTEUR PALPEUR À PLUSIEURS FAISCEAUX, EN PARTICULIER GRILLE LUMINEUSE ET PROCÉDÉ DE DÉTECTION D'OBJETS

(43) Veröffentlichungstag der Anmeldung: 27.10.2021
(73) Patentinhaber: SICK AG, 79183 Waldkirch (DE)
(72) Erfinder: Eble, Johannes, 79183 Waldkirch (DE)

(56) Entgegenhaltungen:
- EP-A1- 3 832 344
- WO-A1-2021/209514
- DE-A1- 3 532 197
- DE-B1- 2 941 739

## Beschreibung

Die Erfindung betrifft einen tastenden Mehrstrahlsensor, insbesondere ein tastendes Lichtgitter und ein Verfahren zur Erfassung von Objekten in einem Überwachungsbereich mittels einer Vielzahl von Überwachungsstrahlen nach dem Oberbegriff von Anspruch 1 beziehungsweise 14.

Lichtgitter werden in der Automatisierungstechnik zur Vermessung von Objekten eingesetzt, um die Position und Ausdehnung von Objekten anhand der Position und Anzahl unterbrochener Strahlen zu messen. Beispielsweise kann auf diesem Weg die Höhe von auf einem Förderband bewegten Objekten bestimmt werden. In der Sicherheitstechnik dienen die parallelen Lichtstrahlen als eine Art virtuelle Wand, und bei Unterbrechung durch ein Objekt wird beispielsweise eine Gefahrenquelle abgesichert.

Die meisten Lichtgitter umfassen eine Vielzahl von Sendern und zugeordneten Empfängern, so dass jeweils ein Paar aus einem Sender und einem Empfänger eine Lichtschranke bildet, die erkennt, ob der zwischen dem Sender und dem Empfänger aufgespannte Lichtstrahl von einem Objekt unterbrochen ist oder nicht. Die Sender und Empfänger sind jeweils in einer Sendeeinheit und einer Empfangseinheit zusammengefasst, die einander gegenüber montiert werden.

Lichtgitter können mehrere hundert Lichtstrahlen umfassen, die auch als Überwachungsstrahlen oder Kanäle bezeichnet werden. Um die Justageanforderungen handhabbar zu halten, werden zwar strahlformende Optiken zur Begrenzung des jeweiligen Sende- und Empfangsstrahls genutzt. Sie sind aber so ausgelegt, dass bei üblichen Abständen zwischen Sendeeinheit und Empfangseinheit ein Empfänger Sendelicht nicht nur von dem zugeordneten Sender, sondern auch von dessen Nachbarn empfängt. Für eine eindeutige Kanalzuordnung werden dann Sender und Empfänger zyklisch und paarweise aktiviert. Dennoch ist zumindest in Winkelrichtung noch eine korrekte Justage erforderlich.

Sogenannte tastende Lichtgitter sind eine spezielle Bauform, bei der in einem tastenden Mehrstrahlsensor Sende- und Empfangseinheit zusammengefasst sind. Es wird also nicht überwacht, ob ein Lichtstrahl zwischen einem Sender und einem gegenüberliegenden Empfänger durch ein Objekt unterbrochen ist. Stattdessen wird nach dem Tastprinzip ein Lichtstrahl ausgesandt und am im Wesentlichen selben Ort wieder empfangen, sofern sich ein Objekt im Lichtstrahl befindet, das den Lichtstrahl reflektiert. Dabei wird in dieser Beschreibung vereinfachend zwischen gerichteter Reflexion und diffuser Remission nicht unterschieden.

Ein tastendes Lichtgitter kann zusätzlich zur reinen Anwesenheitsfeststellung auch den Abstand des angetasteten Objekts in einem Lichtlaufzeitverfahren messen. Man unterscheidet hier Pulslaufzeitverfahren, in denen ein kurzer Lichtpuls ausgesandt und die Zeit bis zum Empfang des reflektierten Lichtpulses gemessen wird, und Phasenverfahren, in denen Sendelicht amplitudenmoduliert und eine Phasenverschiebung zwischen Sende- und Empfangslicht bestimmt wird, wobei die Phasenverschiebung ebenfalls ein Maß für die Lichtlaufzeit ist. Die Grenze zwischen den beiden Verfahren lässt sich aber nicht immer scharf ziehen, denn etwa bei komplexen Pulsmustern wird ein Pulslaufzeitverfahren einem Phasenverfahren ähnlicher als einer klassischen Einzelpulsmessung.

Um auch geringe Empfangsintensitäten nachweisen zu können, können als Lichtempfänger Lawinenphotodioden (APD, Avalanche Photo Diode) eingesetzt werden. Das einfallende Licht löst hier einen kontrollierten Lawinendurchbruch (Avalanche Effect) aus. Dadurch werden die durch einfallende Photonen erzeugten Ladungsträger vervielfacht, und es entsteht ein Photostrom, der zu der Lichtempfangsintensität proportional, dabei aber wesentlich größer ist als bei einer einfachen PIN-Diode. Eine noch größere Empfindlichkeit kann mit Lawinenphotodioden erreicht werden, die im sogenannten Geiger-Modus betrieben werden (SPAD, Single Photon Avalanche Diode).

Aus der EP 3 091 272 A1 ist ein tastendes Lichtgitter bekannt, dessen Lichtempfänger eine Einzelphotonenlawinendiode aufweist. Dieses Lichtgitter nutzt aber weiterhin jeweils einen individuell angesteuerten Lichtsender pro Lichtempfänger. In einer Ausführungsform mit einem Array von Einzelphotonenlawinendioden werden deren Signale kombiniert, ohne dabei aber zwischen Einzelphotonenlawinendioden mit Nutzlicht und ohne Nutzlicht zu unterscheiden.

Aus der DE 20 2018 104 258 U1 ist ein tastendes Lichtgitter bekannt, bei dem einem Lichtsender eine Vielzahl von Lichtempfängern zugeordnet ist. Das Lichtgitter entsteht hier also lediglich empfängerseitig, indem von einem einzigen Lichtsender ein Lichtstrahl oder Lichtfächer ausgesandt wird, der einen größeren Winkelbereich ausleuchtet. Daraus schneiden sich gewissermaßen mehrere Lichtempfänger ihre jeweiligen Überwachungsstrahlen heraus. Nachteilig dabei ist jedoch, dass der Überwachungsbereich durch die fächerförmige Ausbreitung des Sendelichts nicht homogen ausgeleuchtet wird und im Nahbereich der Lichtempfänger Blindbereiche auftreten.

Die DE 29 41 739 B1 offenbart ein Lichtgitter mit einer einzigen Lichtquelle, deren Lichtbündel nacheinander mittels einer von einer Steuereinrichtung beaufschlagten Lichtverteilereinheit auf mehrere, sendeseitig je einen Lichtleiter enthaltende optische Kanäle lenkbar ist.

Aus der DE 35 32 197 A1 ist ein Lichtvorhang mit einer Lichtverteilereinheit bekannt, die als mit einer Lochblende vereinigter Dreh- oder Schwingspiegel ausgebildet ist.

Die nachveröffentlichte EP 3 832 344 A1 der Anmelderin zeigt einen optoelektronischen Sensor mit einer Lichtquelle und einer der Lichtquelle nachgeordneten Strahlteileranordnung zum Aufteilen von Sendelicht in mehrere voneinander separierte Sendelichtstrahlen, wobei die Strahlteileranordnung mehrere schaltbare Strahlteiler zum Aufteilen des Sendelichts enthält.

Es ist daher Aufgabe der Erfindung, einen tastenden Mehrstrahlsensor, insbesondere ein tastendes Lichtgitter zu verbessern.

Diese Aufgabe wird durch einen tastenden Mehrstrahlsensor, insbesondere ein tastendes Lichtgitter und ein Verfahren zur Erfassung von Objekten in einem Überwachungsbereich mittels einer Vielzahl von Überwachungsstrahlen nach Anspruch 1 beziehungsweise 15 gelöst. Wie in einem tastenden Lichtgitter üblich, werden von einer Vielzahl von Lichtsendern Sendelichtstrahlen ausgesandt, wobei Lichtsender im Zusammenhang mit dieser Anmeldung nicht als aktive Lichtquellen wie beispielsweise Laser oder LEDs zu verstehen sind, sondern lediglich als Orte, von denen aus an anderer Stelle erzeugtes Sendelicht als Sendelichtstrahlen in den Überwachungsbereich ausgesandt wird. Falls die Sendelichtstrahlen auf ein Objekt im Überwachungsbereich treffen, werden sie zu wenigstens einem Lichtempfänger reflektiert, der sich bezüglich des Überwachungsbereichs auf derselben Seite befindet wie der Lichtsender. Jedem Lichtsender ist wenigstens ein Lichtempfänger zugeordnet. In der Regel erzeugen mehrere Lichtempfänger ihr Empfangssignal aus dem reflektierten Sendelicht mehrerer Lichtsender. Eine Steuerund Auswertungseinheit wertet das jeweilige Empfangssignal der Lichtempfänger aus. Je nach Ausführungsform wird dabei beispielsweise erkannt, ob sich ein Objekt im Überwachungsbereich befindet, oder es wird anhand der betroffenen Überwachungsstrahlen die Position beziehungsweise Größe des Objekts gemessen.

Die Erfindung geht nun von dem Grundgedanken aus, dass eine Vielzahl von Lichtsendern aus einer gemeinsamen Lichtquelle mit Sendelicht versorgt wird. Das Lichtgitter weist dazu eine Lichtleiterstruktur mit einem Eingang zum Einkoppeln von Sendelicht aus einer gemeinsamen Lichtquelle, eine Vielzahl von Ausgängen zum Auskoppeln von Sendelicht und eine Vielzahl von Lichtleiterästen zum Leiten des Sendelichts vom Eingang zu den Ausgängen auf, wobei den Ausgängen der Lichtleiterstruktur die Lichtsender des Lichtgitters nachgeordnet sind. Insbesondere können die Ausgänge der Lichtleiterstruktur selbst die Lichtsender bilden.

Die Lichtleiterstruktur ist dabei so ausgelegt, dass jeder Lichtleiterast vom Lichtleitereingang bis zum jeweiligen Lichtleiterausgang eine identische optische Weglänge aufweist (im Rahmen üblicher Toleranzen), so dass ein in den Lichtleitereingang eingekoppelter Lichtpuls alle Lichtleiterausgänge gleichzeitig verlässt, die Lichtleiterausgänge also Sendelichtstrahlen mit zeitlich synchronen Lichtpulsen emittieren. Sendelichtstrahlen sind dabei nicht als Strahlen im Sinne der Strahlenoptik innerhalb eines größeren Lichtbündels zu verstehen, sondern als Lichtbündel, die im Überwachungsbereich beim Auftreffen auf ein Objekt entsprechende Lichtflecken erzeugen.

Die Erfindung hat den Vorteil, dass der Aufbau des Lichtgitters deutlich vereinfacht wird. Es entfällt eine Vielzahl von Lichtquellen, die jeweils mit den ihnen zugeordneten Lichtempfängern synchronisiert werden müssten. Durch das Tastprinzip wird auch vor Ort deutlich weniger Bauraum benötigt, denn es muss keine Empfängereinheit montiert werden. Die Justage bei der Installation entfällt weitgehend, insbesondere eine gegenseitige Justage einer Sende- und Empfangseinheit. Das Lichtgitter muss lediglich in der richtigen Höhe und mit einer Ausrichtung angebracht werden, welche der gewünschten Überwachung entspricht.

Die Lichtleiterstruktur kann derart aufgebaut sein, dass das Sendelicht über den Lichtleitereingang in einen ersten Lichtleiterast einkoppelt. Der erste Lichtleiterast wird mehrfach wiederholt in je 2 Lichtleiteräste aufgeteilt, wobei die eingekoppelte Sendelichtleistung gleichmäßig auf die Lichtleiteräste verteilt wird, so dass an jedem Lichtleiterausgang Sendelicht mit der gleichen Leistung emittiert wird.

In einer weiteren Ausführung der Lichtleiterstruktur können vom ersten Lichtleiterast mehrfach einzelne Lichtleiteräste abgekoppelt werden. Hierbei kann das Teilungsverhältnis beispielsweise über die Lichtleiterquerschnitte der Lichtleiteräste zur Homogenisierung der Lichtverteilung beeinflusst werden, so dass auch bei dieser Variante an jedem Lichtleiterausgang Licht mit der gleichen Leistung emittiert wird.

Wie bereits ausgeführt, ist die optische Weglänge vom Eingang der Lichtleiterstruktur zu den Lichtleiterausgängen für jeden Lichtleiterausgang identisch. Um die nötigen Weglängen zu erreichen, können die Lichtleiteräste in Windungen beispielsweise mäanderförmig, sowie über und/oder untereinander verlaufen. Dadurch lassen sich die Lichtleiterausgänge flexibel positionieren und können nicht nur in einer Line, sondern auch 2-dimensional, zum Beispiel als Matrix, angeordnet werden.

Die Lichtleiteräste können sich auch in einer Ebene unter Berücksichtigung ihrer numerischen Apertur kreuzen, wobei die numerische Apertur einen Maximalwinkel zwischen Lichtstrahl und Lichtleiterachse bestimmt, unter dem sich der Lichtstrahl über Totalreflexion im Lichtleiter ausbreitet. Zwei Lichtleiter können sich ohne optisches Übersprechen unter einem Minimalwinkel α kreuzen, wenn der Maximalwinkel unter dem sich ein Strahl im ersten Lichtleiter ausbreitet nicht in den zweiten Lichtleiter überkoppeln kann, das heißt, wenn beim Eintritt des Lichtstrahls aus dem ersten Lichtleiter in den zweiten Lichtleiter keine erneute Totalreflexion im zweiten Lichtleiter erfolgen kann. Damit wird vermieden, dass Licht aus einem Lichtleiter in einen anderen überkoppeln kann. Die Verwendung von sich kreuzenden Lichtleitern hat den Vorteil, dass die Lichtleiter führende Schicht der elektro-optischen Leiterplatte besonders dünn ausgeführt sein kann, da die Lichtleiteräste nicht über- oder untereinander verlaufen müssen.

Die Lichtleiter können aus einer Kunststoffkombination, Glaskombination oder einer Kombination aus Glas und Kunststoff bestehen.

Die Auskopplung des Sendelichts kann über Spiegel, Prismen oder keilförmig ausgestaltete Enden der Lichtleiteräste erfolgen, welche das Sendelicht unter einem Winkel aus der Leiterplattenebene heraus spiegeln. Die Ausspiegelung über die keilförmigen Enden der Lichtleiteräste kann dabei über Totalreflektion oder eine auf die keilförmigen Enden aufgebrachte Spiegelschicht erfolgen.

In einer alternativen Ausführung kann das Sendelicht auch parallel zur Leiterplattenebene direkt aus den Enden der Lichtleiteräste ausgekoppelt werden, so dass zusätzliche Spiegel oder Prismen zur Strahlablenkung entfallen können.

Die Spiegel, Prismen, oder Enden der Lichtleiteräste können eine mikrooptische Struktur aufweisen, die eine definierte Divergenz des Sendelichts erzeugt. Dadurch kann gegebenenfalls auf eine separate Sendeoptik verzichtet werden oder mit einer Sendeoptik eine verbesserte Strahlformung erreicht werden.

Die Verteilung der Lichtleistung auf die einzelnen Ausgänge ist grundsätzlich statisch, das heißt, die Lichtleiterstruktur ist frei von Mitteln zur variablen Aufteilung des Sendelichtes wie beispielsweise elektrooptischen Schaltern oder schaltbaren Wellenleiterkopplern, was zu einer Vereinfachung des Aufbaus beiträgt.

Die Lichtleiterstruktur kann bevorzugt in einer Schicht einer elektrooptischen Leiterplatte integriert sein. Diese Schicht kann sich an einer der Oberflächen oder bei mehrschichtigen Leiterplatten in einer inneren Schicht Leiterplatte befinden. Vorzugsweise sind auch Lichtquelle, Lichtempfänger, sowie Steuer- und Auswertungseinheit auf der elektrooptischen Leiterplatte angeordnet. Somit lässt sich ein kompakter Aufbau realisieren Die Leiterplatte kann auch als flexible Leiterplatte ausgelegt sein.

Den Lichtsendern können zur Erzeugung der Sendelichtstrahlen Sendeoptiken, beispielsweise eine Linse oder eine Blenden-Linsen Kombination, nachgeordnet sein, wobei die Sendelichtstrahlen aufgrund der Divergenz der Sendelichtstrahlen und Justagetoleranzen beim Auftreffen auf ein Objekt im Überwachungsbereich überlappen können. Da alle Lichtsender zeitlich synchron, also gleichzeitig, Sendelichtstrahlen aussenden, stellt dies jedoch keinen Nachteil zum Stand der Technik mit nur einem Lichtsender dar. Vielmehr ergibt sich eine homogenere Ausleuchtung des Überwachungsbereiches, insbesondere eine homogenere Intensitätsverteilung, eine größere Reichweite sowie die Vermeidung von Blindbereichen im Nahbereich der Lichtempfänger.

Den Lichtempfängern ist bevorzugt jeweils eine Empfangsoptik mit einem kleinen Empfangswinkel zugeordnet, welche das Sendelicht in voneinander abgegrenzte Überwachungsstrahlen unterteilt. Dadurch wird unerwünschtes Übersprechen zwischen Kanälen, d.h. ein Registrieren von Sendelicht in einem nicht zuständigen Lichtempfänger, vermieden. Die Empfangsoptiken können dazu lasererzeugte Blenden, wie sie in der noch nicht veröffentlichten Anmeldung DE102018128669.4 der Anmelderin offenbart sind, aufweisen.

Die Überwachungsstrahlen können bevorzugt parallel zueinander verlaufen. Insbesondere bei Lichtgittern hat die Verwendung von parallelen Überwachungsstrahlen den Vorteil, dass das Auflösungsvermögen innerhalb des Überwachungsbereichs des Lichtgitters überall gleich ist, ganz anders als beispielsweise bei Verwendung einer Kamera zur Überwachung eines Überwachungsbereichs.

Lichtempfänger und/oder Lichtsender weisen bevorzugt einen Abstand zueinander auf, der im Millimeterbereich liegt und im Wesentlichen durch die Größe der Empfangsund/oder Sendeoptiken bestimmt wird. Der Abstand der Lichtempfänger und damit der Überwachungsstrahlen bestimmt das Auflösungsvermögen des Lichtgitters. Bei in der Sicherheitstechnik eingesetzten Lichtgittern entsprechen die Abstände einer Vorgabe einer Sicherheitsnorm, etwa 7-10 mm für Fingerschutz, 10-20mm für Armschutz oder 30-38mm für Beinschutz.

Lichtsender und Lichtempfänger können paarweise angeordnet sein, wodurch sich eine besonders homogenere Ausleuchtung des Überwachungsbereiches ergibt. In einer alternativen Ausführungsform können zwei Lichtempfänger je Lichtsender vorgesehen sein. Abhängig von den Anforderungen an die Homogenität der Ausleuchtung des Überwachungsbereiches können auch mehr als zwei Lichtempfänger je Lichtsender vorgesehen sein.

Die Steuer- und Auswertungseinheit ist bevorzugt dafür ausgebildet, aus einer Lichtlaufzeit des Sendelichts einen Abstand erfasster Objekte zu bestimmen. Damit wird nicht nur die laterale Position und Ausdehnung erfasster Objekte anhand der betroffenen Überwachungsstrahlen, sondern auch die Kontur in Strahlrichtung vermessen. Das ausgesandte Lichtsignal weist dazu noch bevorzugter einen Lichtpuls auf. Der Sensor misst also Entfernungen nach dem Pulsverfahren. Dabei sind auch kompliziertere Formen wie Doppelpulse oder sogar Pulscodes denkbar. Es können auch mehrere Lichtpulse nacheinander ausgesandt, empfangen und die jeweiligen Einzelergebnisse gemeinsam statistisch ausgewertet werden, etwa in einem Pulsmittelungsverfahren. Alternativ ist ein Phasenverfahren denkbar.

Die Steuer- und Auswertungseinheit kann bevorzugt als integrierte Schaltung mit einem Ausgang zur Steuerung der Lichtquelle und einer Vielzahl von Eingängen (beispielsweise 16 Eingängen) zum Empfangen der Signale der Lichtempfänger wobei die Signale der Lichtempfänger gleichzeitig empfangen und ausgewertet werden. Dadurch ist insgesamt eine besonders schnelle Objekterkennung möglich insbesondere im Vergleich zu Lichtgittern im Stand der Technik, bei denen die Lichtempfänger zur Vermeidung von Übersprechen in der Regel sequentiell ausgewertet werden.

Als Lichtquelle können zur Bereitstellung möglichst kurzer Lichtpulse bevorzugt Laserdioden (Kantenemitter) oder VCSEL (Oberflächenemitter, engl. Vertical-Cavity Surface-Emitting Laser) verwendet werden. Um eine höhere optische Ausgangsleistung zu erzielen kann beispielsweise auch ein Array von Lichtquellen wie ein VCSEL-Array verwendet werden, wobei die Einzellichtquellen des Arrays vor oder bei Einkopplung in die Lichtleiterstruktur vereinigt werden. Es können auch mehrere Lichtquellen mit verschiedenen Wellenlängen in die Lichtleiterstruktur eingekoppelt werden, wobei detektionsseitig eine wellenlängensensitive Detektion erfolgen kann, um ein Übersprechen zwischen den Lichtempfängern weiter zu verringern oder um Objekte zu detektieren, welche wellenlängenabhängig remittieren.

Die Lichtempfänger können jeweils eine Photodiode oder jeweils mindestens ein Lawinenphotodiodenelement, das mit einer Vorspannung oberhalb einer Durchbruchspannung vorgespannt und somit in einem Geiger-Modus betrieben wird, aufweisen. Die hohe Empfindlichkeit solcher Lawinenphotodiodenelemente im Geiger-Modus, auch Single Photon Avalanche Diode (SPAD) genannt, ist besonders vorteilhaft für ein tastendes Lichtgitter mit Distanzmessung.

Die Erfindung wurde vorstehend insbesondere in Bezug auf ein tastendes Lichtgitter beschrieben. Sie kann ebenso ohne Einschränkung in weiteren gattungsgemäßen tastenden Mehrstrahlsensoren, beispielsweise Absicherungssensoren, oder in Mehrebenenscannern, bei denen ein rotierender Mehrstrahlsensor einen dreidimensionalen Überwachungsbereich abtastet, verwendet werden.

Der erfindungsgemäße Mehrstrahlsensor und das erfindungsgemäße Verfahren können ähnliche Weise weitergebildet werden und zeigen dabei ähnliche Vorteile. Derartige vorteilhafte Merkmale sind beispielhaft, aber nicht abschließend in den sich an die unabhängigen Ansprüche anschließenden abhängigen Ansprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung eines Lichtgitters;
- Fig. 2a: ein Ausführungsbeispiel einer Lichtleiterstruktur zum Aufteilen von Sendelicht

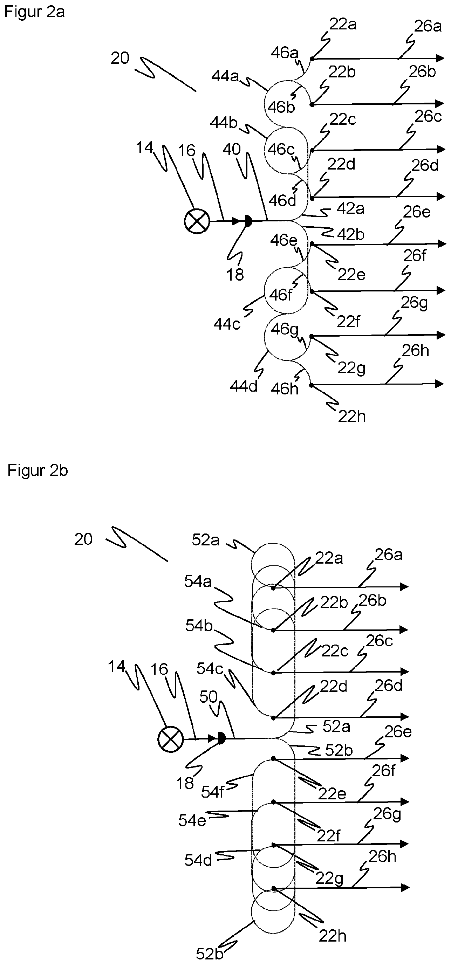

- Fig. 2a: ein alternatives Ausführungsbeispiel einer Lichtleiterstruktur zum Aufteilen von Sendelicht

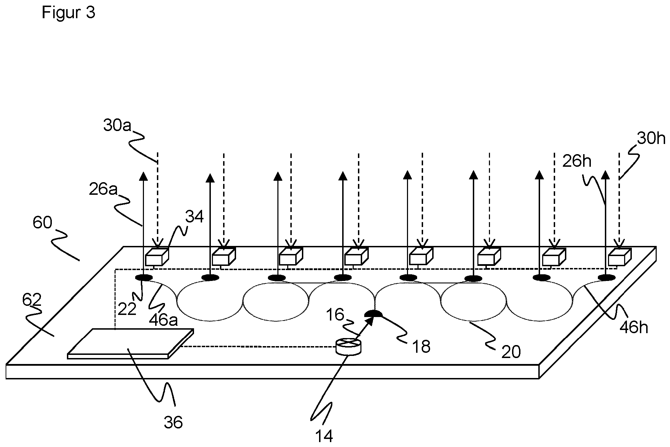

- Fig. 3: eine schematische Darstellung eines Lichtgittermoduls auf einer elektrooptischen Leiterplatte

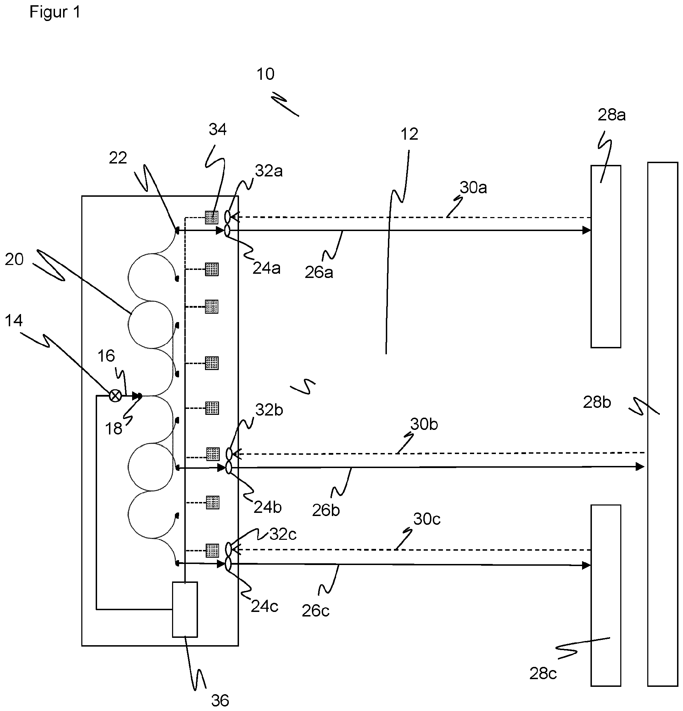

Figur 1 zeigt eine schematische Querschnittsdarstellung einer Ausführungsform eines tastenden Lichtgitters 10 zur Objekterfassung, Positionserkennung oder Vermessung. Entsprechend dem Tastprinzip ist das Lichtgitter 10 seitlich ohne ein gegenüberliegendes empfangendes Gegenstück an seinem Überwachungsbereich 12 angeordnet. Eine Lichtquelle 14 erzeugt Sendelicht 16 im sichtbaren oder nicht sichtbaren, insbesondere infraroten Spektrum. Das Sendelicht 16 wird in einen Lichtleitereingang 18 einer Lichtleiterstruktur 20 eingekoppelt. Die Lichtleiterstruktur wird in den Figuren 2a und 2b beschrieben. Das Sendelicht 16 wird in der Lichtleiterstruktur auf Lichtleiterausgänge 22 aufgeteilt, die mittels optionaler Sendeoptiken 24a-c zeitgleich parallele Sendelichtstrahlen 26a-c in den Überwachungsbereich 12 emittieren. Es sind nur drei Sendeoptiken 24a-c und Sendelichtstrahlen 26a-c dargestellt, tatsächlich emittieren alle Ausgänge zeitgleich Sendelichtstrahlen und es soll vorzugsweise sämtlichen Ausgängen 22 eine Sendeoptik zugeordnet sein. Die Sendeoptiken können komplizierter aufgebaut sein als gezeigt, beispielsweise aus mehreren Linsen bestehen.

Treffen die Sendelichtstrahlen 26a-c im Überwachungsbereich 12 auf ein Objekt 28a-c, so wird ein Anteil zum Lichtgitter 10 reflektiert oder remittiert. Jeweilige Empfangsoptiken 30a-c leiten mittels geeigneter enger Empfangscharakteristik einen Ausschnitt der reflektierten Sendelichtstrahlen als Überwachungsstrahl 30a-c auf einen zugehörigen Lichtempfänger 34. Die Empfangsoptiken 32a-c können entgegen der Darstellung weitere Elemente wie zusätzliche Linsen, Blenden und dergleichen umfassen und sorgen dafür, dass die Überwachungsstrahlen 30a-c ein gewünschtes Strahlprofil aufweisen. Es sind nur drei Empfangsoptiken 32a-c und Überwachungsstrahlen 30a-c dargestellt, tatsächlich soll vorzugsweise sämtlichen Lichtempfängern eine Empfangsoptik zugeordnet sein.

Die Lichtempfänger 34 können Photodioden, Lawinenphotodioden (APD, Avalanche Photon Diode) oder Lawinenphotodioden im Geiger-Modus (SPAD, Single Photon Avalanche Diode) aufweisen. Letztere haben eine besonders hohe Empfindlichkeit und Dynamikkompression. In Figur 1 ist symbolisch jeweils eine SPAD-Matrix als Lichtempfänger 34 dargestellt. Eine Vielzahl von SPADs ist wegen deren besonderen Eigenschaften zur statistischen Auswertung vorteilhaft.

Eine Steuer- und Auswertungseinheit 36 ist mit der Lichtquelle 14 und den Lichtempfängern 34 verbunden. Dadurch kann die Lichtquelle 14 gesteuert werden, beispielsweise zum Aussenden von kurzen Lichtpulsen zu bestimmten Sendezeitpunkten. Außerdem kann die Steuer- und Auswertungseinheit 36 die Lichtempfänger 34 aktivieren und auf die Empfangssignale der Lichtempfänger 34 zugreifen. Zumindest Teile der Steuer- und Auswertungseinheit 36 können auch mit den Lichtempfängern 34 auf einem gemeinsamen Chip integriert werden, dessen Fläche sich dann lichtempfindliche Bereiche der Lawinenphotodiodenelemente und einzelnen oder Gruppen von Lawinenphotodiodenelemente zugeordnete Schaltkreise zu deren Auswertung und Ansteuerung teilen.

Eine sehr einfache Auswertung sieht lediglich einen Schwellwertvergleich der Empfangspegel vor, um binär zu erkennen, ob ein Objekt 28a-c erfasst wurde. Vorzugsweise wird aber auch der Abstand des jeweiligen Objekts 28a-c mit einem Lichtlaufzeitverfahren bestimmt. Dann wird in einer Situation wie in Figur 1 erkannt, dass es mehrere Objekte 28a-c in unterschiedlichen Abständen gibt, beziehungsweise davon für das Lichtgitter ununterscheidbar ein gemeinsames Objekt mit entsprechender Kontur vermessen. Eine Konturvermessung kann zusätzlich durch einen Vergleich der Empfangspegel benachbarter Lichtempfänger, also der an den Lichtempfängern gemessenen Lichtintensitäten verbessert werden.

Für die Lichtlaufzeitmessung wird beispielsweise die Lichtquelle 14 gepulst betrieben und mit TDCs (Time-to-Digital-Converter) die Zeitspanne bis zum Registrieren des reflektierten Sendelichts in den Lichtempfängern 34 bestimmt. Je nach Ausführungsform werden die TDCs unmittelbar durch Signale zum Sende- und Empfangszeitpunkt gestartet und gestoppt, oder sie messen Zeitintervalle ab einem Referenzzeitpunkt beziehungsweise bis zu einem Referenzzeitpunkt, aus dem sich die eigentliche Lichtlaufzeit durch Differenzbildung ebenso ergibt. Sind SPAD-Matrizen als Lichtempfänger 34 vorgesehen, so kann die Lichtlaufzeit für einzelne SPADs, Gruppen von SPADs oder alle SPADs gemeinsam bestimmt werden. Die statistische Verrechnung ist aber nicht nur auf Ebene von Empfangssignalen durch Zusammenfassen von SPADs, sondern auch später auf Ebene von Lichtlaufzeiten denkbar. Die Messgenauigkeit kann zusätzlich zu der soeben erläuterten örtlichen statistischen Auswertung durch Messwiederholung und damit zeitliche statistische Auswertung weiter verbessert werden.

Figur 2a zeigt ein Ausführungsbeispiel einer Lichtleiterstruktur 20 zum Aufteilen des Sendelichts 16. Sendelicht 16 aus der Lichtquelle14 wird über einen Lichtleitereingang18 in einen ersten Lichteiterast 40 der Lichtleiterstruktur 20 eingekoppelt. Der erste Lichtleiterast 40 wird in zwei Lichtleiteräste 42a-b aufgeteilt, wobei die Leistung des Sendelichts gleichmäßig auf die Lichtleiteräste 42a-b aufgeteilt wird. Jeder der Lichtleiteräste 42a-b kann in weitere Lichtleiteräste 44a-d, aufgeteilt werden, welche sich wiederum in Lichtleiteräste 46a-h aufteilen, denen je ein Lichtleiterausgang 22a-h nachgeordnet ist. Dabei erfolgt jeweils eine gleichmäßige Aufteilung der Sendelichtleistung, so dass an jedem Lichtleiterausgang 22a-h der Lichtleiterstruktur 20 die gleiche Sendelichtleistung anliegt. Im Ausführungsbeispiel erfolgt eine dreimalige Aufteilung, so dass die Lichtleiterstruktur 20 acht Lichtleiterausgänge 22a-h aufweist. Die Anzahl der Lichtleiterausgänge ist rein beispielhaft und kann deutlich höher sein. Die optische Weglänge vom Lichtleitereingang 18 zu den Lichtleiterausgängen 22a-h ist für jeden Lichtleiterausgang 22a-h identisch, so dass ein in den Lichtleitereingang 18 eingekoppelter Lichtpuls alle Lichtleiterausgänge 22a-e gleichzeitig verlässt, die Lichtleiterausgänge 22a-h also Sendelichtstrahlen 26a-h mit zeitlich synchronen Lichtpulsen emittieren.

Figur 2b zeigt ein alternatives Ausführungsbeispiel einer Lichtleiterstruktur 20 zum Aufteilen des Sendelichts 16. Sendelicht 16 aus der Lichtquelle14 wird über einen Lichtleitereingang18 in einen ersten Lichteiterast 50 der Lichtleiterstruktur 20 eingekoppelt. Der erste Lichtleiterast 50 wird zunächst wie im Ausführungsbeispiel in Figur 2a in zwei Lichtleiteräste 52a-b aufgeteilt, wobei die Leistung des Sendelichts gleichmäßig auf die Lichtleiteräste 52a-b aufgeteilt wird. Im Unterschied zum Ausführungsbeispiel in Figur 2a werden nun von den Lichtleiterästen 52a-b mehrfach einzelne Lichteiteräste 54a-f abgezweigt. Den Lichtleiterästen 52a-b und 54a-f sind Lichtleiterausgänge 22a-h nachgeordnet. Die optische Weglänge vom Lichtleitereingang 18 zu den Lichtleiterausgängen 22a-h ist für jeden Lichtleiterausgang 22a-h identisch, so dass ein in den Lichtleitereingang 18 eingekoppelter Lichtpuls alle Lichtleiterausgänge 22a-h gleichzeitig verlässt, die Lichtleiterausgänge 22a-h also synchron Sendelichtstrahlen 26a-h emittieren. Damit an allen Lichtleiterausgängen 22a-h der Lichtleiterstruktur 20 die gleiche Sendelichtleistung anliegt, muss die Aufteilung der Sendelichtleistung aus den Lichtleiterästen 52a-b in die Lichtleiteräste mit unterschiedlichen Teilungsverhältnissen erfolgen. Zunächst wird das in den ersten Lichtleiterast 50 eingekoppelte Sendelichtlicht 16 zu gleichmäßig je 50% in die Lichtleiteräste 52a-b aufgeteilt. Beispielhaft werden nun die Teilungsverhältnisse für den Lichtleiterast 52a beschrieben. Von den 50 Prozent der Sendelichtleistung im Lichtleiterast 52a, wird zunächst ein Viertel in den Lichtleiterast 54a abgezweigt, von der verbliebenen Sendelichtleistung ein Drittel in den Lichtleiterast 54b. Die restliche Sendelichtleistung verbleibt zur Hälfte im Lichtleiterast 52a, die andere Hälfte wird in den Lichtleiterast 54c abgezweigt, so das an jedem der vier Lichtleiterausgänge 22a-d 12,5 Prozent der am Lichtleitereingang18 eingekoppelten Sendelichtleistung anliegt. Analoges gilt für die Lichteiteräste 52a und 54d-f und die ihnen nachgeordneten Lichtleiterausgänge 22e-h. Die Teilungsverhältnisse zwischen den Lichtleiterästen können beispielsweise über die Wahl geeigneter Strahlteilerquerschnitte realisiert werden

Figur 3 zeigt eine schematische Darstellung einer weiteren Ausführungsform des tastenden Lichtgitters als Lichtgittermodul 60 mit einer opto-elektronischer Leiterplatte 62. Die Komponenten des Lichtgitters, Lichtquelle 14, Lichtleiterstruktur 20 mit Lichtleitereingang 18 und Lichtleiterausgängen 22, sowie Lichtempfängern 34 und Steuer -und Auswerteeinheit 36, sind auf der opto-elektronischen Leiterplatte 62 angeordnet. Die Lichtleiterstruktur 20 kann auf der Oberfläche oder in einer inneren Schicht der Leiterplatte 62 angeordnet sein. Die Lichtleiterausgänge 22 emittieren über Spiegel, Prismen oder keilförmig ausgestaltete Enden (nicht gezeigt) der Lichtleiteräste 46a-46h Sendelichtstrahlen 26a-h senkrecht zur Leiterplattenebene. Von Objekten im Überwachungsbereich reflektierte oder remittierte Überwachungsstrahlen 30a-h werden von den Lichtempfängern 34 empfangen. Den Lichtleiterausgängen 22 und/oder den Lichtempfängern 34 können Optiken (nicht gezeigt) nach- beziehungsweise vorgeordnet sein. Es können mehrere Lichtgittermodule in Reihe kombiniert werden, so dass das Lichtgitter in der Länge skaliert werden kann. Damit die Sendelichtstrahlen der Lichtgittermodule 62 sich nicht gegenseitig stören, können die Lichtgittermodule beispielsweise zeitversetzt, mit unterschiedlichen Sendelichtwellenlängen und entsprechenden Empfangsfiltern oder mit unterschiedlichen Polarisationen arbeiten

## Patentansprüche

1. Tastender Mehrstrahlsensor, insbesondere tastendes Lichtgitter (10) zur Erfassung von Objekten (28a-c) in einem Überwachungsbereich (12) mittels einer Vielzahl von Überwachungsstrahlen (30a-c), das wenigstens eine Lichtquelle (14) zur Erzeugung von Sendelicht (16), eine Lichtleiterstruktur (20) zum Aufteilen des Sendelichts (16) auf eine Vielzahl von Lichtsendern zum Aussenden von Sendelichtstrahlen (26a-c), eine Vielzahl von Lichtempfängern (34) zum Empfangen des von den Objekten reflektierten Sendelichts als jeweils ein Überwachungsstrahl (30a-c), sowie eine Steuer- und Auswertungseinheit (36) aufweist, welche die Objekte (28a-c) anhand von jeweiligen Empfangssignalen der Lichtempfänger (34) erfasst, wobei die Lichtleiterstruktur (20) einen Lichtleitereingang (18) zum Einkoppeln des Sendelichts, eine Vielzahl von Lichtleiterausgängen (22) zum Auskoppeln des Sendelichts (16) und eine Vielzahl von Lichtleiterästen zum Leiten des Sendelichts vom Lichtleitereingang (18) zu den Lichtleiterausgängen (22) aufweist, wobei optische Weglängen vom Lichtleitereingang (18) zu jedem der Lichtleiterausgänge (22) identisch sind, **dadurch gekennzeichnet, dass** die Lichtsender (22, 24a-c) und/oder die Lichtempfänger (34) zueinander um mindestens einen Millimeter beabstandet sind.

2. Tastender Mehrstrahlsensor nach Anspruch 1,
wobei dem Lichtleitereingang (18) ein erster Lichtleiterast (40) nachgeordnet ist, und die Vielzahl von Lichtleiterästen (44a-d, 46a-h) durch mehrfach wiederholtes Aufteilen des ersten Lichtleiterastes (40) in jeweils wenigstens zwei Lichtleiteräste erzeugt ist.

3. Tastender Mehrstrahlsensor nach Anspruch 1,
wobei dem Lichtleitereingang (18) ein erster Lichtleiterast (40) nachgeordnet ist, und die Vielzahl von Lichtleiterästen (44a-d, 46a-h) durch mehrfach wiederholtes Aufteilen des ersten Lichtleiterastes (40) in jeweils zwei Lichtleiteräste erzeugt ist.

4. Tastender Mehrstrahlsensor nach Anspruch 1,
wobei dem Lichtleitereingang (18) wenigstens ein erster Lichtleiterast (52a) nachgeordnet ist, und die Vielzahl von Lichtleiterästen durch mehrfaches Abzweigen von einzelnen Lichtleiterästen (54a-c) aus dem ersten Lichtleiterast (52a) erzeugt ist.

5. Tastender Mehrstrahlsensor nach einem der vorhergehenden Ansprüche, wobei jeder Lichtleiterausgang (22) Sendelichtstrahlen (26a-h) mit gleicher Sendlichtleistung aussendet.

6. Tastender Mehrstrahlsensor nach einem der vorhergehenden Ansprüche, wobei die Lichtleiterausgänge (22) eine mikrooptische Struktur zur Kontrolle der Divergenz der Sendelichtstrahlen (26a-h) aufweisen.

7. Tastender Mehrstrahlsensornach einem der vorhergehenden Ansprüche, wobei die Lichtleiterausgänge (22) die Lichtsender bilden.

8. Tastender Mehrstrahlsensor einem der Ansprüche 1 bis 6, wobei den Lichtleiterausgängen (22) jeweils eine Sendeoptik (24a-c) nachgeordnet ist und die Sendeoptiken (24a-c) die Lichtsender bilden.

9. Tastender Mehrstrahlsensor nach einem der vorhergehenden Ansprüche, wobei die Lichtleiterstruktur (20) in einer Schicht einer elektrooptischen Leiterplatte (62) integriert ist.

10. Tastender Mehrstrahlsensor nach einem der vorhergehenden Ansprüche, wobei den Lichtempfängern (34) jeweils eine Empfangsoptik (32a-c) mit einem kleinen Empfangswinkel zugeordnet ist.

11. Tastender Mehrstrahlsensor nach einem der vorhergehenden Ansprüche, wobei die Überwachungsstrahlen (30a-c) parallel zueinander verlaufen.

12. Tastender Mehrstrahlsensor nach einem der vorhergehenden Ansprüche, wobei die Steuer- und Auswertungseinheit (36) dafür ausgebildet ist, aus einer Lichtlaufzeit des Sendelichts (16) einen Abstand erfasster Objekte (28a-c) zu bestimmen.

13. Tastender Mehrstrahlsensor nach einem der vorhergehenden Ansprüche, wobei die Lichtleiterstruktur (20) frei von Mitteln zur variablen Aufteilung des Sendelichts (16) auf die Lichtleiterausgänge (22) ist.

14. Verfahren zur Erfassung von Objekten (28a-c) in einem Überwachungsbereich (12) mittels einer Vielzahl von Überwachungsstrahlen (30a-c); wobei für eine tastende Erfassung mit mindestens einer Lichtquelle (14) Sendelicht (16) über einen Lichtleitereingang (18) in eine Lichtleiterstruktur (20) eingekoppelt, auf eine Vielzahl von Lichtleiterausgänge (22) verteilt und als Sendelichtstrahlen (26a-c) ausgesandt wird und die von den Objekten (28a-c) reflektierten Sendelichtstrahlen in einer Vielzahl von Lichtempfängern (34) als jeweils ein Überwachungsstrahl (30a-c) empfangen und in einer Steuer- und Auswerteeinheit (36) ausgewertet werden, um die Objekte (28a-c) zu erfassen, wobei das Sendelicht in der Lichtleiterstruktur (20) vom Lichtleitereingang zu den Lichtleiterausgängen (22) identische optische Weglängen zurücklegt und die Sendelichtstrahlen (26a-c) gleichzeitig in den Überwachungsbereich (12) ausgesendet werden
**dadurch gekennzeichnet,**
**dass** die Lichtsender (22, 24a-c) und/oder die Lichtempfänger (34) zueinander um mindestens einen Millimeter beabstandet sind.

## Claims

1. A scanning multi-beam sensor, in particular a scanning light grid (10), for detecting objects (28a-c) in a monitored zone (12) by means of a plurality of monitoring beams (30a-c) that has at least a light source (14) for generating transmitted light (16), a light guide structure (20) for splitting the transmitted light (16) over a plurality of light transmitters for transmitting transmitted light beams (26a-c), a plurality of light receivers (34) for receiving the transmitted light reflected from the objects as a monitored beam (30a-c) in each case, and a control and evaluation unit (36) that detects the objects (28a-c) using respective received signals of the light receivers (34), wherein the light guide structure (20) has a light guide input (18) for coupling the transmitted light, a plurality of light guide outputs (22) for decoupling the transmitted light (16), and a plurality of light guide branches for guiding the transmitted light from the light guide input (18) to the light guide outputs (22), wherein optical path lengths from the light guide input (18) to each of the light guide outputs (22) are identical, **characterized in that** the light transmitters (22, 24a-c) and/or the light receivers (34) are spaced apart from one another by at least one millimeter.

2. A scanning multi-beam sensor in accordance with claim 1, wherein a first light guide branch (40) is disposed downstream of the light guide input (18) and the plurality of light guide branches (44a-d, 46a-h) are generated by a multiple repeated splitting of the first light guide branch (40) into a respective at least two light guide branches.

3. A scanning multi-beam sensor in accordance with claim 1, wherein a first light guide branch (40) is disposed downstream of the light guide input (18) and the plurality of light guide branches (44a-d, 46a-h) are generated by a multiple repeated splitting of the first light guide branch (40) into a respective two light guide branches .

4. A scanning multi-beam sensor in accordance with claim 1, wherein at least one light guide branch (52a) is disposed downstream of the light guide input (18) and the plurality of light guide branches are generated by multiple branching of individual light guide branches (54a-c) from the first light guide branch (52a).

5. A scanning multi-beam sensor In accordance with any one of the preceding claims, wherein every light guide output (22) transmits transmitted light beams (26a-h) having the same transmitted light power.

6. A scanning multi-beam sensor In accordance with any one of the preceding claims,
wherein the light guide outputs (22) have a microoptical structure for monitoring the divergence of the transmitted light beams (26a-h).

7. A scanning multi-beam sensor In accordance with any one of the preceding claims, wherein the light guide outputs (22) form the light transmitters.

8. A scanning multi-beam sensor in accordance with any one of the claims 1 to 6, wherein a respective transmission optics (24a-c) is disposed downstream of the light guide outputs (22) and the transmission optics (24a-c) form the light transmitters.

9. A scanning multi-beam sensor In accordance with any one of the preceding claims, wherein the light guide structure (30) is integrated in a layer of an electrooptical circuit board (62).

10. A scanning multi-beam sensor In accordance with any one of the preceding claims, wherein a respective reception optics (32a-c) having a small reception angle is associated with the light receivers (34).

11. A scanning multi-beam sensor In accordance with any one of the preceding claims, wherein the monitoring beams (30a-c) extend in parallel with one another.

12. A scanning multi-beam sensor In accordance with any one of the preceding claims, wherein the control and evaluation unit (36) is configured to determine a distance of detected objects (28a, c) from a time of flight of the transmitted light (16).

13. A scanning multi-beam sensor In accordance with any one of the preceding claims, wherein the light guide structure (20) is free of means for a variable splitting of the transmitted light (16) over the light guide outputs (22).

14. A method of detecting objects (28a-c) in a monitored zone (12) by means of a plurality of monitoring beams (30a-c), wherein, for a scanning detection by at least one light source (14), transmitted light (16) is coupled via a light guide input (18) into a light guide structure (20), is distributed over a plurality of light guide outputs (22), and is transmitted as transmitted light beams (26a-c), and the transmitted light beams reflected from the objects (28a-c) are received as a respective monitored beam (30a-c) in a plurality of light receivers (34) and are evaluated in a control and evaluation unit (36) to detect the objects (28a-c), wherein the transmitted light covers identical optical path lengths in the light guide structure (20) from the light guide input to the light guide outputs (22) and the transmitted light beams (26a-c) are simultaneously transmitted into the monitored zone (12),
**characterized in that**
the light transmitters (22, 24a-c) and/or the light receivers (34) are spaced apart from one another by at least one millimeter.

## Revendications

1. Capteur multi-faisceaux à balayage, en particulier barrière lumineuse à balayage (10), pour détecter des objets (28a-c) dans une zone à surveiller (12) au moyen d'une pluralité de faisceaux de surveillance (30a-c), qui comprend au moins une source lumineuse (14) pour générer de la lumière d'émission (16), une structure de guide de lumière (20) pour dissocier la lumière d'émission (16) sur une pluralité d'émetteurs de lumière destinés à émettre des faisceaux lumineux d'émission (26a-c), une pluralité de récepteurs de lumière (34) pour recevoir la lumière d'émission réfléchie par les objets en tant que faisceau de surveillance respectif (30a-c), ainsi qu'une unité de commande et d'évaluation (36) qui détecte les objets (28a-c) à l'aide de signaux de réception respectifs des récepteurs de lumière (34), la structure de guide de lumière (20) présentant une entrée de guide de lumière (18) pour injecter la lumière d'émission, une pluralité de sorties de guide de lumière (22) pour extraire la lumière d'émission (16), et une pluralité de branches de guide de lumière pour guider la lumière d'émission de l'entrée de guide de lumière (18) vers les sorties de guide de lumière (22), les longueurs de trajet optiques de l'entrée de guide de lumière (18) vers chacune des sorties de guide de lumière (22) étant identiques,
**caractérisé en ce que** les émetteurs de lumière (22, 24a-c) et/ou les récepteurs de lumière (34) sont espacés les uns des autres d'au moins un millimètre.

2. Capteur multi-faisceaux à balayage selon la revendication 1, dans lequel une première branche de guide de lumière (40) est disposée en aval de l'entrée de guide de lumière (18), et la pluralité de branches de guide de lumière (44a-d, 46a-h) est produite par dissociation répétée plusieurs fois de la première branche de guide de lumière (40) en au moins deux branches de guide de lumière respectives.

3. Capteur multi-faisceaux à balayage selon la revendication 1, dans lequel une première branche de guide de lumière (40) est disposée en aval de l'entrée de guide de lumière (18), et la pluralité de branches de guide de lumière (44a-d, 46a-h) est produite par dissociation répétée plusieurs fois de la première branche de guide de lumière (40) en deux branches de guide de lumière respectives.

4. Capteur multi-faisceaux à balayage selon la revendication 1, dans lequel au moins une première branche de guide de lumière (52a) est disposée en aval de l'entrée de guide de lumière (18), et la pluralité de branches de guide de lumière est produite par dérivation multiple de branches de guide de lumière individuelles (54a-c) à partir de la première branche de guide de lumière (52a).

5. Capteur multi-faisceaux à balayage selon l'une des revendications précédentes, dans lequel chaque sortie de guide de lumière (22) émet des faisceaux lumineux d'émission (26a-h) de même puissance de lumière d'émission.

6. Capteur multi-faisceaux à balayage selon l'une des revendications précédentes, dans lequel les sorties de guide de lumière (22) présentent une structure micro-optique pour contrôler la divergence des faisceaux lumineux d'émission (26a-h).

7. Capteur multi-faisceaux à balayage selon l'une des revendications précédentes, dans lequel les sorties de guide de lumière (22) constituent les émetteurs de lumière.

8. Capteur multi-faisceaux à balayage selon l'une des revendications 1 à 6, dans lequel une optique d'émission (24a-c) respective est disposée en aval des sorties de guide de lumière (22), et les optiques d'émission (24a-c) constituent les émetteurs de lumière.

9. Capteur multi-faisceaux à balayage selon l'une des revendications précédentes, dans lequel la structure de guide de lumière (20) est intégrée dans une couche d'une carte de circuit imprimé électro-optique (62).

10. Capteur multi-faisceaux à balayage selon l'une des revendications précédentes, dans lequel une optique de réception (32a-c) respective, présentant un petit angle de réception, est associée aux récepteurs de lumière (34).

11. Capteur multi-faisceaux à balayage selon l'une des revendications précédentes, dans lequel les faisceaux de surveillance (30a-c) sont parallèles entre eux.

12. Capteur multi-faisceaux à balayage selon l'une des revendications précédentes, dans lequel l'unité de commande et d'évaluation (36) est réalisée pour déterminer une distance d'objets détectés (28a-c) à partir d'un temps de vol de la lumière d'émission (16).

13. Capteur multi-faisceaux à balayage selon l'une des revendications précédentes, dans lequel la structure de guide de lumière (20) est dépourvue de moyens de dissociation variable de la lumière d'émission (16) sur les sorties de guide de lumière (22).

14. Procédé de détection d'objets (28a-c) dans une zone à surveiller (12) au moyen d'une pluralité de faisceaux de surveillance (32a-c), dans lequel, pour une détection par balayage, une lumière d'émission (16) est injectée dans une structure de guide de lumière (20) via une entrée de guide de lumière (18) à l'aide d'au moins une source lumineuse (14), est dissociée sur une pluralité de sorties de guide de lumière (22) et est émise sous forme de faisceaux lumineux d'émission (26a-c), et les faisceaux lumineux d'émission réfléchis par les objets (28a-c) sont reçus sous la forme d'un faisceau de surveillance (30a-c) respectif dans une pluralité de récepteurs de lumière (34) et sont évalués dans une unité de commande et d'évaluation (36), afin de détecter les objets (28a-c), dans la structure de guide de lumière (20), la lumière d'émission parcourt des longueurs de trajet optiques identiques de l'entrée de guide de lumière aux sorties de guide de lumière (22), et les faisceaux lumineux d'émission (26a-c) sont émis simultanément dans la zone à surveiller (12),
**caractérisé en ce que**
les émetteurs de lumière (22, 24a-c) et/ou les récepteurs de lumière (34) sont espacés les uns des autres d'au moins un millimètre.
